# EUROPÄISCHE PATENTSCHRIFT

(11) **EP 3 380 729 B1**
(45) Veröffentlichungstag und Bekanntmachung des Hinweises auf die Patenterteilung: **14.08.2019**
(21) Anmeldenummer: 16818974.4
(22) Anmeldetag: 25.11.2016
(51) Int. Cl.: F03G 7/06, A47B 88/463, E05C 19/02

(54) **ANSCHUBVORRICHTUNG FÜR SCHIEBETÜR**
PUSHING DEVICE FOR A SLIDING DOOR
DISPOSITIF DE POUSSÉE POUR PORTE COULISSANTE

(30) Priorität: 26.11.2015 DE 102015015171
(43) Veröffentlichungstag der Anmeldung: 03.10.2018
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2016/000422
(87) Internationale Veröffentlichungsnummer: WO 2017/088849

(56) Entgegenhaltungen:
- WO-A1-2004/101919
- DE-A1- 10 301 798
- DE-A1-102008 027 541
- DE-A1-102008 030 933
- DE-A1-102010 021 183

## Beschreibung

Die Erfindung betrifft eine Anschubvorrichtung zum Anschieben einer Schiebetür in einer Anschubrichtung relativ zu einem Möbelkorpus mit einem Gehäuse und mit einem relativ zu diesem beweglichen Mitnehmer, wobei der Mitnehmer Teil einer im Gehäuse geführten, mittels einer Feder entgegen der Anschubrichtung belasteten Kolbeneinheit ist und wobei die Feder mittels eines einen Bowdenzug bildenden Formgedächtniselements belastbar ist sowie ein Möbelstück mit einem Möbelkorpus und mit mindestens einer relativ zum Möbelkorpus verschiebbaren Schiebetür als Möbelstückteile sowie mit einer Anschubvorrichtung zum Anschieben der Schiebetür.

Die DE 103 01 798 A1 offenbart einen Stellantrieb mit einem Formgedächtniselement, mit dem die Position eines Stellglieds zwischen zwei Positionen bistabil umschaltbar ist. Die elektrischen Anschlüsse beider Enden des Formgedächtniselements sind durch einen gemeinsamen Stecker zu führen. Wie bei einer Ausführung mit einer Schlauchtülle ein Kurzschluss des nicht isolierten Formgedächtniselements vermieden werden kann, geht aus dieser Druckschrift nicht hervor.

Aus der DE 198 02 639 A1 ist eine Antriebsvorrichtung bekannt, bei der ein Formgedächtniselement an ein stößelartiges Betätigungselement angeschlossen ist. Eine das Formgedächtniselement umgebende Isolierschicht führt nach dem Abschalten der Stromquelle zu einem langsamen Abkühlen des Formgedächtniselements und damit zu einem langen Zeitintervall bis zum Wiedereinschalten.

Die DE 10 2010 021183 A1 zeigt die Merkmale des Oberbegriffs des Anspruchs 1.

Der vorliegenden Erfindung liegt die Aufgabe zugrunde, eine betriebssichere Anschubvorrichtung für eine Schiebetür zu entwickeln.

Diese Problemstellung wird mit den Merkmalen des Hauptanspruches gelöst. Dazu weist der Mitnehmer eine in die Anschubrichtung zeigende Anschlagfläche auf. Der Bowdenzug durchdringt die Kolbeneinheit, die Feder und das Gehäuse. Außerdem weist der Bowdenzug ein außerhalb der Kolbeneinheit angeordnetes kolbeneinheitsseitiges Ende und ein relativ zu diesem bewegliches, außerhalb des Gehäuses angeordnetes gehäuseseitiges Ende auf, die an zwei Pole einer Stromquelle anschließbar sind.

Im Möbelstück ist das Gehäuse entweder am Möbelkorpus oder an der Schiebetür befestigt. Der Mitnehmer ist mit dem jeweils anderen Möbelstückteil in einem Teilbereich des Gesamthubs der Möbelstückteile zueinander kontaktierbar.

Weitere Einzelheiten der Erfindung ergeben sich aus den Unteransprüchen und der nachfolgenden Beschreibung schematisch dargestellter Ausführungsformen.
- Figur 1:: Schiebetürschrank mit Anschubvorrichtung;
- Figur 2:: Schnitt der Anschubvorrichtung aus Figur 1;
- Figur 3:: Schiebetürschrank mit teilweise geöffneter Schiebetür;
- Figur 4:: Schnitt der Anschubvorrichtung aus Figur 3;
- Figur 5:: Schiebetürschrank mit geöffneter Schiebetür.

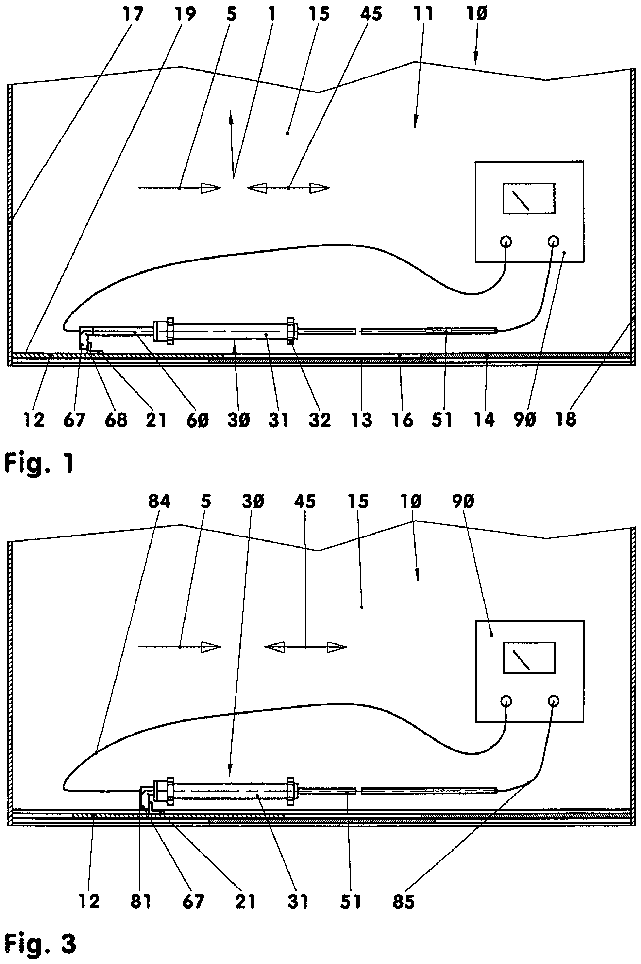

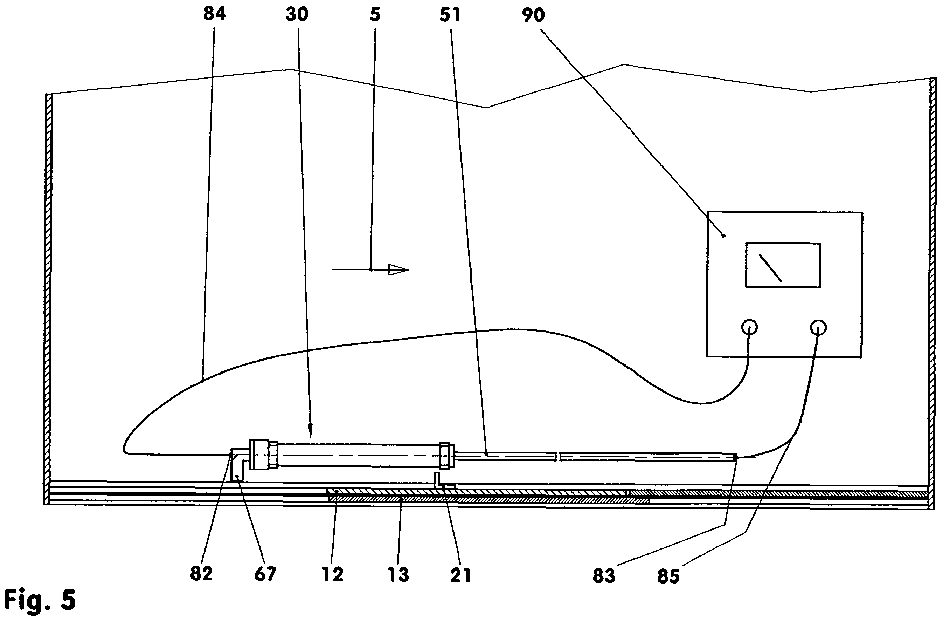

Die Figuren 1, 3 und 5 zeigen einen Schiebetürschrank (10) mit einem Möbelkorpus (11) und drei Schiebetüren (12 - 14) in einer Ansicht von unten auf die Decke (15). Eine mittlere Schiebtür (13) ist vor den beiden äußeren Schiebetüren (12, 14) geführt. Diese mittlere Schiebetür (13) kann jedoch auch hinter den äußeren Schiebetüren (12, 14) geführt sein. Die linke Schiebetür (12) und die rechte äußere Schiebetür (14) sind z.B. auf gemeinsamen Führungsbahnen verfahrbar, sodass entweder die rechte Schiebetür (14) oder die linke Schiebetür (12) öffenbar ist. Zum Öffnen der linken Schiebetür (12) wird diese beispielsweise in der nach rechts orientierten Anschubrichtung (5) verschoben. Für die rechte Schiebetür (14) ist die Anschubrichtung in der Gegenrichtung orientiert. Die mittlere Schiebetür (13) kann in beide Richtungen geöffnet werden. Die Masse der einzelnen Tür beträgt beispielsweise 35 Kilogramm. Die Figur 1 zeigt den Schiebetürschrank (10) mit geschlossenen Schiebetüren (12 - 14). In der Darstellung der Figur 3 ist die linke Schiebetür (12) teilweise aufgeschoben. Die Figur 5 zeigt den Schrank (10) mit vollständig geöffneter linker Schiebetür (12). Sowohl der Möbelkorpus (11) als auch die Schiebetüren (12 - 14) sind Möbelstückteile (11 - 14).

Der Möbelkorpus (11) hat zwei Seitenwände (17, 18), die an die Decke (15) angrenzen und Anschläge für die geschlossenen äußeren Schiebetüren (12, 14) bilden. Die oberen Führungsschienen (16) sind an der Decke (15) angeordnet. Beispielsweise an der Innenseite (19) der linken Schiebetür (12) ist ein Mitnahmeelement (21) befestigt. Dies ist Ausführungsbeispiel ein L-förmiger Winkel, der beispielsweise im oberen Bereich der Schiebetür (12) in den Innenraum des Schranks (10) hineinragt.

An der Decke (15) des Schranks (10) sind eine Vorrichtung (30) zum Anschieben einer Schiebetür (12 - 14) und eine Stromquelle (90) angeordnet. Die Anschubvorrichtung (30) für z.B. alle drei Schiebetüren (12 - 14) kann gleichartig ausgebildet sein. Die Anschubvorrichtung (30) kann auch an der einzelnen Schiebetür (12 - 14) angeordnet sein, wobei das Mitnahmeelement (21) dann am Möbelkorpus (11) als anderem Möbelstückteil (11) angeordnet ist.

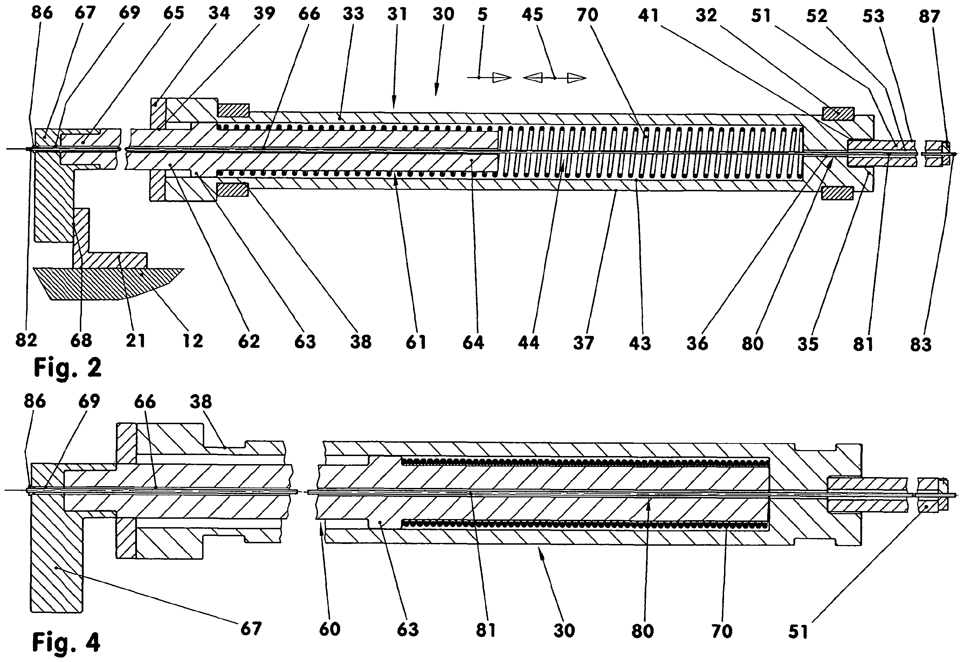

Die Figuren 2 und 4 zeigen Längsschnitte der Anschubvorrichtung (30). Hierbei zeigt die Figur 2 einen Schnitt der Anschubvorrichtung (30) aus Figur 1 und die Figur 4 einen Schnitt der in der Figur 3 dargestellten Vorrichtung (30) zum Anschieben einer Schiebetür (12 - 14).

Die Anschubvorrichtung (30) hat ein Gehäuse (31) und eine relativ zu dieser bewegliche Kolbeneinheit (60). Das Gehäuse (31) ist beispielsweise an der Decke (15) des Möbelkorpus (11) mittels zweier Befestigungsklammern (32) und einer hier nicht dargestellten Adapterplatte befestigt. Im Ausführungsbeispiel hat das Gehäuse (31) eine Länge von 140 Millimetern und einen Durchmesser von 20 Millimetern. Das Gehäuse (31) umfasst einen zylindrisch ausgebildeten Gehäusekörper (33), der stirnseitig einen mit dem Gehäusekörper (33) z.B. verschraubten scheibenförmigen Gehäusedeckel (34) trägt. Der Gehäusedeckel (34) hat einen zentralen Deckeldurchbruch (39) der die Kolbeneinheit (60) umgreift. Der Gehäuseboden (35) hat einen zentral angeordneten Durchbruch (36). Der Durchmesser dieses z.B. kreisförmig ausgebildeten Durchbruchs (36) beträgt im Ausführungsbeispiel 1,2 Millimeter. An seiner Umfangsfläche (37) hat der Gehäusekörper (33) Ringnuten (38), in die die Befestigungsklammern (32) eingreifen.

Das Gehäuse (31) trägt an seinem der Kolbeneinheit (60) abgewandten Ende eine schlauchartige Hülle (51), die beispielsweise mit viel Spiel an der Decke (15) fixiert ist. Diese schlauchartige Hülle (51) steckt im Ausführungsbeispiel in einer Gehäuseeinsenkung (41) und liegt lose am Gehäuse (31) an. Die schlauchartige Hülle (51) kann jedoch auch Teil des Gehäuses (31) sein oder in dieses integriert sein. Sie hat im Ausführungsbeispiel eine Länge von 2 Metern und einen Außendurchmesser von fünf Millimetern. Die schlauchartige Hülle (51) hat einen Längsdurchbruch (52) mit einem über seine Länge konstanten Innendurchmesser von beispielsweise 1,5 Millimetern. Dieser Innendurchmesser ist damit um 25 % größer als der Durchmesser des Durchbruchs (36) des Gehäusebodens (35). Die Mittellinien des Längsdurchbruchs (52) und des Gehäusebodendurchbruchs (36) fluchten miteinander.

Die Kolbeneinheit (60) ist im Gehäuse (31) geführt und ragt einseitig aus diesem heraus. Sie umfasst eine Stange (61) sowie einen normal zur Anschubrichtung (5) der z.B. linken Schiebetür (12) orientierten Mitnehmer (67). In der Darstellung der Figur 1 kontaktiert der Mitnehmer (67) das türseitige Mitnahmeelement (21) mit einer Anschlagfläche (68), wobei das Mitnahmeelement (21) in der Anschubrichtung (5) vor dem Mitnehmer (67) liegt. Der in der Figur 1 dargestellte Mitnehmer (67) hat eine einzige Anschlagfläche (68). Er ist somit einwertig ausgebildet.

Die Stange (61) hat einen in Längsrichtung (45) orientierten Stangendurchbruch (66) und weist einen Stangenabschnitt (62), einen Kolbenbund (63) und einen Führungsabschnitt (64) auf. Der Stangenabschnitt (62) durchdringt den nicht abgedichteten Gehäusedeckel (34) und verbindet den Kolbenbund (63) mit dem Mitnehmer (67). Beispielsweise ist der Stangenabschnitt (62) im Gehäusedeckel (34) mittels einer Spielpassung geführt. Mitnehmerseitig hat der Stangenabschnitt (62) einen Haltezapfen (65), auf den der Mitnehmer (67) aufgesteckt ist. Beispielsweise kann der Mitnehmer (67) mit dem Stangenabschnitt (62) verklebt sein. Eine den Mitnehmer (67) durchdringende Mitnehmerbohrung (69) fluchtet mit dem Stangendurchbruch (66).

Der Kolbenbund (63) ist zylindrisch ausgebildet und an der Gehäuseinnenwandung (43) des Gehäuseinnenraums (44) geführt. Auf der dem Stangenabschnitt (62) abgewandten Seite des Kolbenbundes (63) ist der Führungsabschnitt (64) angeordnet, der in Richtung des Gehäusebodens (35) zeigt. Auf diesem Führungsabschnitt (35) sitzt eine Feder (70) in der Bauform einer Druckfeder (70), die sich am Gehäuseboden (35) und am Kolbenbund (63) abstützt. Diese Feder (70) hat im Ausführungsbeispiel eine Länge von 276 Millimetern und 55 Windungen, einen Außendurchmesser von 10 Millimetern und eine Drahtstärke von 0,8 Milimetern. Die Federkraft liegt zwischen 16 Newton und 22 Newton. Die Länge des Führungsabschnitts (64) entspricht beispielsweise der minimalen Länge der komprimierten Feder (70), das sind z.B. 20 % der Länge der unbelasteten Feder (70). Die Kompression der Feder (70) ist damit durch das Anstoßen des Führungsabschnitts (64) am Gehäuseboden (35) begrenzt. Bei einer Entlastung der Feder (70) ist ihr maximaler Hub durch das Anschlagen des Kolbenbunds (63) am Gehäusedeckel (34) begrenzt.

Das Gehäuse (31), die schlauchartige Hülle (51) und die Kolbeneinheit (60) sind im Ausführungsbeispiel aus einem thermoplastischen Kunststoff, z.B. Polyoxymethylen (POM) hergestellt. Dies ist ein teilkristallines, steifes, zähes und elastisches Polymerisat. Es hat eine Dichte von 1400 Kilogramm pro Kubikmeter und einen Zug-Elastizitätsmodul von 2800 Newton pro Quadratmillimeter. Seine Wärmeleitfähigkeit beträgt beispielsweise 0,24 Watt pro Meter und Kelvin. Die Wärmeleitfähigkeit ist damit größer als 0,2 Watt pro Meter und Kelvin. Der spezifische elektrische Widerstand des Werkstoffs beträgt 10¹³ Ohm mal Meter. Der Werkstoff kann z.B. zur Verbesserung des Gleit- und Verschleißverhaltens mit Molybdändisulfid gefüllt sein. Auch der Einsatz eines anderen Werkstoffs oder eines Verbundwerkstoffes ist denkbar. Die einzelnen Bauteile können aus unterschiedlichen Werkstoffen hergestellt sein.

Aus der Kolbeneinheit (60) und aus der schlauchartigen Hülle (51) ragen die Enden (82, 83) eines Drahtes (81) heraus, der das Gehäuse (31), die Feder (70) und die Kolbeneinheit (60) durchdringt. An den Enden (82, 83) dieses Drahtes (81) sind elektrische Leitungen (84, 85) angeschlossen, die den Draht (81) mit der Stromquelle (90), z.B. einer Gleichstromquelle (90) verbinden. Diese Stromquelle (90) hat beispielsweise eine Spannung von 24 Volt und liefert einen Strom mit 5 Ampere.

Der Draht (81) trägt an seinen beiden Enden Fixierelemente (86, 87). Das Fixierelement (86) am kolbeneinheitsseitigen Ende (82) ist eine als Kegelklemmhülse ausgebildete Hülse (86), die in den Darstellungen der Figuren 1 - 5 am Mitnehmer (67) anliegt. Die Hülse (86) verhindert zumindest das Einziehen des Drahtendes (82) in die Kolbeneinheit (60). Die Fixierung (82) ist damit einwertig ausgebildet. Das Drahtende (82) kann jedoch auch in der Kolbeneinheit (60) fixiert sein. Beispielsweise kann sie dann zweiwertig auch das Herausziehen des Drahtes (81) begrenzen.

An dem der Kolbeneinheit (60) abgewandten Ende (83) trägt der Draht (81) als Fixierelement (87) z.B. eine Fixierklammer (87). Diese beispielsweise zweiteilige Fixierklammer (87) umgreift klemmend den Draht (81), sodass dieser nicht relativ zur Fixierklammer (87) verschiebbar ist. Im Ausführungsbeispiel liegt die Fixierklammer (87) einwertig an der schlauchartigen Hülle (51) an und verhindert einwertig ein Einziehen des Endes (83) des Drahtes (81) in die schlauchartige Hülle (51) und in das Gehäuse (31). Das Drahtende (83) kann jedoch auch zweiwertig relativ zur schlauchartigen Hülle (51) oder zum Gehäuse (31) gesichert sein.

Der Draht (81) ist beispielsweise aus einer Nickel-TitanLegierung hergestellt und hat einen Durchmesser von 0,5 Millimetern. Seine Zugfestigkeit beträgt beispielsweise zwischen 270 Newton pro Quadratmillimeter und 400 Newton pro Quadratmillimeter. Dieser Draht (81) mit einer Länge von beispielsweise 2,5 Metern bildet ein drahtförmiges Formgedächtniselement (81). Das z.B. vorbehandelte Formgedächtniselement (81) hat im Ausführungsbeispiel zwei reversible Gestalten. Durch Temperaturänderung ist es zwischen diesen Gestalten quasi umschaltbar. Es lässt nur eine geringfügige elastische Verformung zu. Bei einer Erwärmung, z.B. nach der Beaufschlagung des Drahtes mit einem elektrischen Stromfluß, beginnt ab einer Temperatur von z.B. 60 Grad eine Gefügeumwandlung. Die spezifische Stromdichte entlang des Drahtes (81) ist beispielsweise größer als 10 Ampere pro Quadratmillimeter. Im Ausführungsbeispiel beträgt sie 25,5 Ampere pro Quadratmillimeter. Dieser Umwandlungsvorgang setzt sich bei weiterer Erwärmung, beispielsweise bis zu einer Temperatur von 90 Grad Celsius, fort. Bei der Erwärmung verkürzt sich das Formgedächtniselement (81). Beispielsweise nimmt es seine in der Figur 3 dargestellte verkürzte Länge, z.B. 97 % seiner ursprünglichen Länge, ein. Bei weiterer Erwärmung erfolgt keine weitere Umwandlung. Bei einer Beibehaltung der Temperatur behält das Formgedächtniselement (81) seine Gestalt bei.

Nach dem Abschalten der Stromquelle (90) kühlt das Formgedächtniselement (81) wieder ab. Sobald es beispielsweise wieder eine Temperatur von 60 Grad Celsius erreicht hat, hat es seine ursprüngliche Länge wieder eingenommen. Der Umwandlungsvorgang zwischen den beiden Gestalten kann eine Hysterese aufweisen. Die Rückverformung kann auch allein durch die Entladung eines Speichers potentieller Energie, z.B. einer Feder, erfolgen.

Beim Zusammenbau der Anschubvorrichtung (30) wird beispielsweise zunächst das drahtförmige Formgedächtniselement (81) durch die schlauchartige Hülle (51), das Gehäuse (31), die Feder (70) und die Stange (61) geführt. Danach werden diese Teile (31, 51, 61, 81) zusammengeschoben und der Gehäusedeckel (34) verschlossen. Gegebenenfalls wird hierbei die schlauchartige Hülle (51) am Gehäuse (31) befestigt. Nach dem Auffädeln des Mitnehmers (67) auf das drahtförmige Formgedächtniselement (81) kann der Mitnehmer (67) an der Stange (61) befestigt werden. Bei entspannter Feder (70) kann nun der Draht (81) an seinen beiden Enden geradegezogen werden, sodass er zwischen seinen beiden Enden keine Schlaufen, Umlenkungen, etc. aufweist. Auf der Seite des Mitnehmers (67) wird z.B. die Kegelklemmhülse (86) auf den Draht (81) aufgeschoben und an diesem fixiert. Außerhalb der schlauchartigen Hülle (51) wird z.B. die Fixierklammer (87) am Draht befestigt.

Die Kegelklemmhülse (86) und das Fixierelement (87) können derart montiert sein, dass sie an dem jeweils benachbarten Bauteil (67, 51) anliegen. Der Draht (81) ist dann straff zwischen diesen beiden Fixierelementen (86, 87) gespannt. Es ist aber auch denkbar, den Draht (81) längsverschieblich relativ zum Gehäuse (31) und/oder zur Kolbeneinheit (60) zu montieren. Beispielsweise kann der Draht (81) im Ausführungsbeispiel nach der Montage der Fixierelemente (86, 87) bis zu einem halben Millimeter Spiel in axialer Richtung aufweisen. Auch eine andere Reihenfolge des Zusammenbaus ist denkbar.

Im Schrank (10) wird beispielsweise an der Innenseite (19) der z.B. linken Schiebetür (12) das Mitnahmeelement (21) befestigt. An der Decke (15) wird die Anschubvorrichtung (30) z.B. mit den zwei Befestigungsklammern (32) an der Adapterplatte befestigt. Eine weitere Befestigungsklammer kann zum Halten der schlauchartigen Hülle (51) an der Decke (15) eingesetzt werden. Bei einer Montage der Anschubvorrichtung (30) auf dem Schrank (10) kann die schlauchartige Hülle (51) z.B. unbefestigt auf dem Schrank (10) aufliegen. Die Anschubvorrichtung (30) ist somit kompakt aufgebaut. Ihr Hub beträgt z.B. 3 % ihrer Gesamtlänge. Beispielsweise kann der Hub der Anschubvorrichtung (30) je nach dem Werkstoff des Formgedächtniselements (81) zwischen 2,5 % und 4 % der Länge der Anschubvorrichtung (30) betragen.

Nach der Montage der Anschubvorrichtung (30) im Schrank (10) können die Enden (82, 83) des Drahtes (81) elektrisch mit der Stromquelle (90) verbunden werden. Die Stromquelle (90) ist beispielsweise ebenfalls im Schrank (10) angeordnet.

Die montierte Anschubvorrichtung (30) ist derart im Schrank (10) angeordnet, dass die Längsrichtung (45) des Gehäuses (31) waagerecht und parallel zur Vorderseite des Schranks (10) liegt. Bei geschlossener z.B. linker Schiebetür (12) liegt der Mitnehmer (67) am Mitnahmeelement (21) an oder hat einen Abstand von bis zu fünf Millimetern von diesem. Um beispielsweise die linke äußere Schiebetür (12) zu öffnen, wird die Stromquelle (90) eingeschaltet. Der durch den Draht (81) fließende Strom erwärmt diesen. Hierbei wird auch die den Draht (81) umgebende Luft erwärmt, die durch die nicht abgedichteten Durchbrüche (36, 52, 66, 69) in die Umgebung (1) strömt. Ein Teil der Wärme wird an die schlauchartige Hülle (51) übertragen. Die hohe Wärmeleitfähigkeit und die große Oberfläche der schlauchartigen Hülle (51) - die Oberfläche (53) entspricht dem Zehnfachen der Oberfläche des in der Hülle (51) geführten Drahtes (81) - verhindert eine Überhitzung des Drahtes (81). Außerdem ist der Innendurchmesser eines jeden der den Draht (81) führenden Durchbrüche (36, 52, 66, 69) mindestens doppelt so groß wie der Außendurchmesser des Drahts (81).

Das sich verkürzende Formgedächtniselement (81) bildet mit den beiden endseitigen Fixierelementen (86, 87) einen Bowdenzug (80), der die Kolbeneinheit (60), die schlauchartige Hülle (51) und das Gehäuse (31) entgegen der Wirkung der Feder (70) belastet. Die Kolbeneinheit (60) wird relativ zum Gehäuse (31) in die Anschubrichtung (5) verschoben, wobei die Feder (70) komprimiert wird. Der Mitnehmer (67) verschiebt das Mitnahmeelement (21) und die z.B. linke Schiebetür (12) in die Anschubrichtung (5).

Die Figuren 3 und 4 zeigen die Anschubvorrichtung (30) mit dem verkürzten Bowdenzug (80). Die z.B. linke Schiebetür (12) ist teilweise geöffnet. Nun kann die Stromquelle (90) abgeschaltet werden. Es ist aber auch denkbar, die Stromquelle (90) automatisch, z.B. aufgrund des Signals eines Wegmesssystems, abzuschalten. Zum weiteren Öffnen der z.B. linken Schiebetür (12) schiebt der Bediener diese beispielsweise manuell von der in der Figur 3 dargestellten teilgeöffneten Position in die in der Figur 5 dargestellte geöffnete Position. Die Schiebetür (12) einschließlich des Mitnahmeelements (21) ist dabei von dem einwertig ausgebildeten Mitnehmer (67) entkoppelt.

Nach dem Abschalten der Stromquelle (90) kühlt das Formgedächtniselement (81) ab. Der Bowdenzug (80) längt sich. Die beim Abkühlen vom Draht (81) abgegebene Wärme wird durch die Durchbrüche (36, 52, 66, 69) und die Oberfläche (53) der schlauchartigen Hülle (51) an die Umgebung (1) abgegeben, sodass kein Wärmestau entsteht. Die Feder (70) verschiebt die Kolbeneinheit (60) relativ zum Gehäuse (31) nach außen, also entgegen der Anschubrichtung (5). Die Abkühlzeit des Formgedächtniselements (81) ist beispielsweise geringer als 6 Sekunden.

Zum Schließen der Schiebetür (12) kann diese z.B. manuell in die geschlossene Position verschoben werden. Das Öffnen erfolgt dann, wie oben beschrieben.

Auch Kombinationen der einzelnen Ausführungsbeispiele sind denkbar.

### Bezugszeichenliste:

- 1: Umgebung

- 5: Anschubrichtung

- 10: Schrank, Schiebetürschrank
- 11: Möbelkorpus, Möbelstückteil
- 12: Schiebetür, links; Möbelstückteil
- 13: Schiebtür, Mitte; Möbelstückteil
- 14: Schiebetür, rechts; Möbelstückteil
- 15: Decke
- 16: Führungsschienen
- 17, 18: Seitenwände
- 19: Innenseite von (12)

- 21: Mitnahmeelement

- 30: Anschubvorrichtung, Vorrichtung zum Anschieben einer Schiebetür
- 31: Gehäuse
- 32: Befestigungsklammern
- 33: Gehäusekörper
- 34: Gehäusedeckel
- 35: Gehäuseboden
- 36: Durchbruch, Gehäusebodendurchbruch
- 37: Umfangsfläche
- 38: Ringnuten
- 39: Deckeldurchbruch

- 41: Gehäuseeinsenkung

- 43: Gehäuseinnenwandung
- 44: Gehäuseinnenraum
- 45: Längsrichtung

- 51: schlauchartige Hülle
- 52: Längsdurchbruch
- 53: Oberfläche von (51)

- 60: Kolbeneinheit
- 61: Stange
- 62: Stangenabschnitt
- 63: Kolbenbund
- 64: Führungsabschnitt
- 65: Haltezapfen
- 66: Stangendurchbruch
- 67: Mitnehmer
- 68: Anschlagfläche
- 69: Mitnehmerbohrung

- 70: Feder, Druckfeder

- 80: Bowdenzug
- 81: Draht, Formgedächtniselement
- 82: Ende von (81), kolbeneinheitsseitiges Drahtende
- 83: Ende von (81)
- 84: elektrische Leitung
- 85: elektrische Leitung
- 86: Fixierelement, Hülse, Kegelklemmhülse
- 87: Fixierelement, Fixierklammer

- 90: Stromquelle, Gleichstromquelle

## Patentansprüche

1. Anschubvorrichtung (30) zum Anschieben einer Schiebetür (12; 13; 14) in einer Anschubrichtung (5) relativ zu einem Möbelkorpus (11) mit einem Gehäuse (31) und mit einem relativ zu diesem beweglichen Mitnehmer (67), wobei der Mitnehmer (67) Teil einer im Gehäuse (31) geführten, mittels einer Feder (70) entgegen der Anschubrichtung (5) belasteten Kolbeneinheit (60) ist und wobei die Feder (70) mittels eines ein Formgedächtniselement (81) aufweisenden Bowdenzugs (80) belastbar ist, **dadurch gekennzeichnet,**
**dass** der Mitnehmer (67) eine in die Anschubrichtung (5) zeigende Anschlagfläche (68) aufweist,
**dass** der Bowdenzug (80) die Kolbeneinheit (60), die Feder (70) und das Gehäuse (31) durchdringt und
**dass** der Bowdenzug (80) ein außerhalb der Kolbeneinheit (60) angeordnetes kolbeneinheitsseitiges Ende (82) und ein relativ zu diesem bewegliches, außerhalb des Gehäuses (31) angeordnetes gehäuseseitiges Ende (83) aufweist, die an zwei Pole einer Stromquelle (90) anschließbar sind.

2. Anschubvorrichtung (30) nach Anspruch 1, **dadurch gekennzeichnet, dass** sie eine am Gehäuse (31) abstützbare schlauchartige, vom Bowdenzug (80) durchdrungenen und in der Zugrichtung des Bowdenzugs verformungssteife Hülle (51) aufweist.

3. Anschubvorrichtung (30) nach Anspruch 2, **dadurch gekennzeichnet, dass** der Innendurchmesser der Hülle (51) zwischen dem 1,5-fachen und dem dreifachen des Durchmessers des Bowdenzugs (80) beträgt.

4. Anschubvorrichtung nach Anspruch 2, **dadurch gekennzeichnet, dass** der Bowdenzug (80) ein an die Hülle (51) anlegbares Fixierelement (87) trägt.

5. Anschubvorrichtung nach Anspruch 1, **dadurch gekennzeichnet, dass** zumindest die Kolbeneinheit (60) und das Gehäuse (31) aus einem thermoplastischen Kunststoff bestehen, dessen Wärmeleitfähigkeit größer ist als 0,2 Watt pro Meter und Kelvin.

6. Möbelstück (10) mit einem Möbelkorpus (11) und mit mindestens einer relativ zum Möbelkorpus (11) verschiebbaren Schiebetür (12; 13; 14) als Möbelstückteile (11 - 14) sowie mit einer Anschubvorrichtung (30) nach Anspruch 1 zum Anschieben der Schiebetür (12 - 14), **dadurch gekennzeichnet, dass** das Gehäuse (31) entweder am Möbelkorpus (11) oder an der Schiebetür (12; 13; 14) befestigt ist und
dass der Mitnehmer (67) mit dem jeweils anderen Möbelstückteil (11; 12; 13; 14) in einem Teilbereich des Gesamthubs der Möbelstückteile (11, 12; 11, 13; 11,14) zueinander kontaktierbar ist.

7. Möbelstück (10) nach Anspruch 6, **dadurch gekennzeichnet, dass** das Formgedächtniselement (81) an eine am Möbelkorpus (11) angeordnete Stromquelle (90) angeschlossen ist.

## Claims

1. A pushing device (30) for pushing a sliding door (12; 13; 14) in a pushing direction (5) relative to a furniture body (11), having a housing (31) and having an entrainer (67) that can be moved relative to this housing (31), wherein the entrainer (67) is part of a piston unit (60) which is guided in the housing (31) and which is loaded against the pushing direction (5) by means of a spring (70), and wherein the spring (70) can be loaded by means of a Bowden cable (80) having a shape-memory element (81), **characterized in that**
the entrainer (67) has a stop surface (68) pointing in the pushing direction (5),
the Bowden cable (80) traverses the piston unit (60), the spring (70) and the housing (31), and
the Bowden cable (80) has a piston-unit-side end (82) arranged outside of the piston unit (60) and a housing-side end (83) movable relative to this piston-unit-side end (82) and arranged outside of the housing (31), which ends can be connected to two poles of a current source (90).

2. The pushing device (30) according to Claim 1, **characterized in that** said device has a hose-like sheath (51), which can be supported on the housing (31), which is traversed by the Bowden cable (80) and which is resistant to deformation in the pulling direction of the Bowden cable.

3. The pushing device (30) according to Claim 2, **characterized in that** the inside diameter of the sheath (51) is between 1.5 times and three times the diameter of the Bowden cable (80).

4. The pushing device according to Claim 2, **characterized in that** the Bowden cable (80) bears a fixing element (87) that can be applied to the sheath (51).

5. The pushing device according to Claim 1, **characterized in that** at least the piston unit (60) and the housing (31) are composed of a thermoplastic resin, of which the thermal conductivity is greater than 0.2 watts per meter-kelvin.

6. A furniture item (10) having a furniture body (11) and having at least one sliding door (12; 13; 14) that can be slid relative to the furniture body (11) as furniture parts (11 - 14) and having a pushing device (30) according to Claim 1 for pushing the sliding door (12 - 14), **characterized in that** the housing (31) is fastened either to the furniture body (11) or to the sliding door (12; 13; 14) and that the entrainer (67) and each of the respective other furniture parts (11; 12; 13; 14) are contactable with each other in a portion of the total travel of the furniture parts (11, 12; 11, 13; 11, 14).

7. The furniture item (10) according to Claim 6, **characterized in that** the shape-memory element (81) is connected to a current source (90) arranged on the furniture body (11).

## Revendications

1. Dispositif à poussoir (30) pour pousser une porte coulissante (12 ; 13 ; 14) dans une direction de poussée (5) relative à un corps de meuble (11) comprenant un boîtier (31) et un élément entraîneur (67) relativement mobile par rapport à ce corps de meuble, l'élément entraîneur (67) faisant partie d'une unité de piston (60) guidée dans le boîtier (31) et chargée par un ressort (70) dans le sens contraire an sens de la poussée (5), le ressort (70) pouvant être chargé par un câble Bowden (80) comportant un élément à mémoire de forme (81),
**caractérisé en ce**
**que** l'élément entraineur (67) possède une surface de butée (68) orientée dans la direction de la poussée (5),
- **que** le câble Bowden (80) traverse l'unité de piston (60), le ressort (70) et le boîtier (31) et que le câble Bowden (80) présente une extrémité (82) disposée du côté de l'unité de piston, à l'extérieur de l'unité de piston (60), et une extrémité (83) relative mobile par rapport à la dite extrémité, disposée du côté du boîtier, à l'extérieur du boîtier (31), les deux extrémités pouvant être raccordées à deux pôles d'une source de courant (90).

2. Dispositif à poussoir (30) selon la revendication 1, **caractérisé en ce qu'**il possède une gaine (51) sous la forme d'un tuyau qui peut s'appuyer contre le boîtier (31), qui est traversée par le câble Bowden (80) et qui est résistante à la déformation dans la direction de traction du câble Bowden.

3. Dispositif à poussoir (30) selon la revendication 2, **caractérisé en ce que** le diamètre intérieur de la gaine (51) est entre 1,5 fois et trois fois le diamètre du câble Bowden (80).

4. Dispositif à poussoir selon la revendication 2, **caractérisé en ce que** câble Bowden (80) porte un élément de fixation (87) qui peut être appliqué contre la gaine (51).

5. Dispositif à poussoir selon la revendication 1, **caractérisé en ce qu'**au moins l'unité de piston (60) et le boîtier (31) sont composés d'une matière thermoplastique ayant une conductivité thermique supérieure à 0,2 watt par mètre-kelvin.

6. Meuble (10) comportant un corps de meuble (11) et au moins une porte coulissante (12; 13; 14), susceptible de glisser par rapport au corps de meuble (11), comme pièces d'un meuble (11 - 14), ainsi qu'un dispositif à poussoir (30) selon la revendication 1 pour pousser la porte coulissante (12 - 14), **caractérisé en ce que** le boîtier (31) est fixé au corps de meuble (11) ou à la porte coulissante (12; 13; 14) et que l'élément entraîneur (67) peut entrer en contact avec l'autre pièce de meuble respective (11 ; 12 ; 13 ; 14) dans une zone partielle de la course complète des pièces du meuble (11, 12 ; 11, 13; 11, 14).

7. Meuble (10) selon la revendication 6, **caractérisé en ce que** l'élément à mémoire de forme (81) est raccordé à une source de courant (90) prévue sur le corps du meuble (11).
